(19) Europäisches Patentamt
European Patent Office
Office européen des brevets

(11) EP 1 102 820 B1

(12) # EUROPÄISCHE PATENTSCHRIFT

(45) Veröffentlichungstag und Bekanntmachung des Hinweises auf die Patenterteilung:
**01.02.2006 Patentblatt 2006/05**

(21) Anmeldenummer: **99934622.4**

(22) Anmeldetag: **07.07.1999**

(51) Int Cl.:
*C09D 151/00* (2006.01) *C08F 291/00* (2006.01)

(86) Internationale Anmeldenummer:
**PCT/EP1999/004783**

(87) Internationale Veröffentlichungsnummer:
**WO 2000/002967 (20.01.2000 Gazette 2000/03)**

(54) **WÄSSRIGE, PIGMENTHALTIGE POLYMERZUBEREITUNGEN**
AQUEOUS POLYMER PREPARATIONS CONTAINING PIGMENTS
PREPARATIONS POLYMERES AQUEUSES CONTENANT DES PIGMENTS

(84) Benannte Vertragsstaaten:
**DE FR NL**

(30) Priorität: **08.07.1998 DE 19830554**

(43) Veröffentlichungstag der Anmeldung:
**30.05.2001 Patentblatt 2001/22**

(73) Patentinhaber: **BASF Aktiengesellschaft**
**67056 Ludwigshafen (DE)**

(72) Erfinder:
- **ZHAO, Cheng-Le**
  **D-68723 Schwetzingen (DE)**
- **DITTRICH, Uwe**
  **D-67061 Ludwigshafen (DE)**
- **SCHWARTZ, Manfred**
  **D-67227 Frankenthal (DE)**
- **HÜMMER, Wolfgang**
  **D-67134 Birkenheide (DE)**

(74) Vertreter: **Kinzebach, Werner et al**
**Ludwigsplatz 4**
**67059 Ludwigshafen (DE)**

(56) Entgegenhaltungen:
**EP-A- 0 623 659**
**US-A- 5 185 387**
**US-A- 5 344 675**
**US-A- 5 744 540**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 102 820 B1

## Beschreibung

Die vorliegende Erfindung betrifft, wässrige, im wesentlichen lösungsmittelfreie, pigmenthaltige Zubereitungen, die wenigstens eine wässrige Polymerisatdispersion enthalten.

Pigmenthaltige, wässrige Zubereitungen finden als Beschichtungsmassen, Dichtungsmassen und insbesondere als Dispersionsfarben zu Zwecken des Bautenschutzes oder zu dekorativen Zwecken breite Verwendung. Derartige Zubereitungen enthalten in der Regel als Bindemittel ein filmbildendes Polymer in Form einer wässrigen Polymerisatdispersion, wenigstens ein anorganisches Pigment und gegebenenfalls einen oder mehrere anorganische Füllstoffe sowie übliche Hilfsmittel. Beim Trocknen der Zubereitungen bilden die Polymerteilchen in der zubereitung einen Polymerfilm aus, der die nicht filmbildenen Bestandteile, d.h. die Pigmente und die anorganischen Füllstoffe, bindet.

Aus Kostengründen müssen die polymeren Bindemittel in der Lage sein, größere Mengen eines Pigments bzw. Füllstoffs zu binden. In polymergebundenen pigmenthaltigen Zubereitungen ist das Volumenverhältnis von Pigment zu Bindemittel durch die Pigmentvolumenkonzentration PVK charakterisiert (siehe Ullmanns Enzyklopädie der technischen Chemie, 4. Aufl. Bd 15, S. 667). Ein geringes Pigmentbindevermögen führt zu einer geringen mechanischen Festigkeit bei größeren PVK-Werten, insbesondere zu einer geringen Naßabriebfestigkeit und Scheuerfestigkeit.

Die Fähigkeit eines Polymeren zur Filmbildung bestimmt wesentlich die Qualität der beim Trockenen der Zubereitungen erhaltenen Beschichtungen. Grundsätzlich nimmt die Fähigkeit eines Polymeren zur Filmbildung mit abnehmender Glasübergangstemperatur zu. Eine niedrige Glasübergangstemperatur hat allerdings zur Folge, daß der Polymerfilm weich ist, und damit die Beschichtung klebrig wird, was eine geringe Blockfestigkeit zur Folge hat und die Gefahr des Anschmutzens birgt. Eine Beschichtung mit einem "weichen" Polymeren wird zudem bei mechanischer Belastung leicht zerstört. Andererseits ist bei einer zu hohen Glasübergangstemperatur des Polymeren eine gleichmäßige Filmbildung bei üblichen Verarbeitungstemperaturen nicht gewährleistet, so daß derartige Beschichtungen ohne Ergreifen weiterer Maßnahmen in der Regel keine ausreichende mechanische Festigkeit auf weisen.

Konventionelle Zubereitungen auf Basis wässriger Polymerisatdispersionen enthalten in der Regel ein Polymer mit höherer Glasübergangstemperatur (härteres Polymer) und geringe Mengen an organischen Lösungsmitteln oder Weichmachern, sog. Filmbildehilfsmitteln (Koaleszenzmittel), um die Mindestfilmbildetemperatur (MFT), d.h. die Temperatur, oberhalb derer das Polymer in der zubereitung verfilmt, herabzusetzen und eine Filmbildung des Polymeren auch bei niedrigen Verarbeitungstemperaturen zu gewährleisten. Lösungsmittel und flüchtige Weichmacher werden beim Trocknen der zubereitung freigesetzt, wobei sich die Oberflächenhärte des Polymerfilms erhöht. Die Freisetzung von flüchtigen organischen Bestandteilen ist jedoch insbesondere bei Beschichtungsmassen für Innenanwendungen, z.B. bei Dispersionsfarben, nicht erwünscht. Zudem sind Beschichtungen auf Basis "harter" polymerer Bindemittel oftmals spröde und weisen keine ausreichende Flexibilität auf.

Aus der WO 98/10001 ist ein Verfahren zur Herstellung wässriger Polymerdispersionen durch mehrstufige radikalische, wässrige Emulsionspolymerisation bekannt, bei dem man in einer ersten Stufe ein vergleichsweise weiches Polymer herstellt, anschließend Monomere zur Bildung eines harten Polymers zugibt, diese in dem weichen Polymer quellen läßt und anschließend erneut eine Polymerisation auslöst. Die beschriebenen Polymerdispersionen sind insbesondere als Haftklebstoffe geeignet.

Die EP-A 609 756 beschreibt lösungsmittelfreie Dispersionsfarben, die als polymeres Bindemittel eine wässrige Dispersion eines Stufenpolymerisats enthalten, dessen Polymerteilchen eine weiche Polymerphase mit einer Glasübergangstemperatur im Bereich von -55 °C bis -5 °C und eine härtere Polymerphase mit einer Glasübergangstemperatur im Bereich von 0 °C bis +50 °C umfassen. Die mechanische Stabilität der erhaltenen Anstriche ist jedoch nicht zufriedenstellend.

Aus der EP 612 805 sind Bindemittel für lösungsmittelfreie Dispersionsfarben bekannt, die wenigstens ein Stufenpolymerisat, das vorzugsweise mehr als 25 Gew.-% einer harten Polymerphase mit einer Glasübergangstemperatur im Bereich von +20 °C bis +160 °C und weniger als 75 Gew.-% einer weichen Polymerphase mit einer Glasübergangstemperatur unterhalb +20 °C umfasst, und ein nichtfilmbildendes Polymer mit einer Glasübergangstemperatur im Bereich von +20 °C bis +160 °C enthalten. Die dort beschriebenen Dispersionsfarben weisen nur einen geringen Pigmentgehalt auf.

Die US 5,185,387 beschreibt wässrige Polymerdispersionen mit einer Mindestfilmbildungstemperatur unterhalb 50°C, deren Polymerteilchen eine Kern/Schale-Struktur besitzen. Das leicht vernetzte Kernpolymer A weist eine Glasübergangstemperatur Tg unterhalb 0°C und eine Dehnbarkeit von wenigstens 150% auf. Das im wesentlichen nicht vernetzte Schalenpolymer weist eine Tg unterhalb 60°C auf, wobei die Tg des Kernpolymers wenigstens um 10°C geringer ist als diejenige des Schalenpolymers.

Der vorliegenden Erfindung liegt somit die Aufgabe zugrunde, eine im wesentliche lösungsmittelfreie, pigmenthaltige Zubereitung auf Basis einer wässrigen Polymerdispersion bereitzustellen, die die Nachteile des Standes der Technik überwindet und die auch bei größeren Pigmentgehalten eine hinreichende mechanische Stabilität, insbesondere eine hohe Naßabriebfestigkeit, gewährleistet.

Die Aufgabe wurde überaschenderweise gelöst durch pigmenthaltige, wässrige Zubereitungen, die als polymeres Bindemittel eine wässrige Dispersion eines Polymers A enthalten, worin die Polymerteilchen des Polymers A wenigstens 80 Gew.-% eines in Wasser nicht löslichen Polymers 1 mit einer Glasübergangstemperatur im Bereich von -50 bis +40 °C und bis zu 20 Gew-.-% wenigstens eines in Wasser nicht löslichen Polymers i mit einer Glasübergangstemperatur oberhalb 70°C enthalten.

Demnach betrifft die vorliegende Erfindung eine pigmenthaltige, wässrige Zubereitung, die im wesentlichen frei ist von organischen Lösungsmitteln, enthaltend:

i) wenigstens ein Polymer A in Form dispers verteilter Polymerteilchen, worin die Polymerteilchen

- 80 Gew.-% bis 99,9 Gew.-%, bezogen auf das Gesamtgewicht des Polymers A, eines in Wasser nicht löslichen Polymers 1 mit einer Glasübergangstemperaturn $T_G1$ im Bereich von -50 bis +40 °C, aufgebaut aus ethylenisch ungesättigten Monomeren M1 und
- 0,1 bis 20 Gew.-%, bezogen auf das Gesamtgewicht des Polymers A, eines oder mehrerer, in Wasser nicht löslicher Polymere i mit einer Glasübergangstemperatur $T_Gi$ oberhalb 70 °C, aufgebaut aus ethylenisch ungesättigten Monomeren Mi, umfassen,

wobei für alle Polymere i gilt, daß die Differenz $T_Gi - T_G1 > 30$ K ist.

ii) wenigstens ein Pigment und gegebenenfalls einen odere mehrere Füllstoffe.

wobei das Polymer A erhältlich ist durch ein mehrstufiges radikalisches Emulsionspolymerisationsverfahren in einem wässrigen Polymerisationsmedium, umfassend die aufeinanderfolgenden Stufen:

a) Herstellung eines Polymers 1 durch Polymerisation der Monomere 1 in einer ersten Polymerisationsstufe,

b) Herstellung eines ersten Polymers i durch Polymerisation einer ersten Charge der Monomere Mi in Gegenwart des Polymers 1 in einer zweiten Polymerisationsstufe,

c) gegebenenfalls Herstellung weiterer Polymere i durch Polymerisation weiterer Monomere Mi in jeweils aufeinanderfolgenden Polymerisationsstufen i in Gegenwart des Polymerisats der jeweils vorangegangenen Polymerisationsstufe,

wobei die Polymerisation der Monomere M1 vor Beginn der Zugabe der Monomere i in der zweiten Polymerisationsstufe im wesentlichen abgeschlossen ist und die Zugabe der Monomere Mi in der zweiten und gegebenenfalls in den weiteren Polymerisationsstufen so erfolgt, daß während der Zugabe der Monomere Mi der Polymerisationsumsatz $U^i$ der in der jeweiligen Polymerisationsstufe zu polymerisierenden Monomere Mi zu keinem Zeitpunkt 50 mol-% überschreitet.

Eine im wesentlichen lösungsmittelfreie zubereitung enthält in der Regel weniger als 0,1 %, vorzugsweise weniger als 500 ppm und insbesondere weniger als 100 ppm flüchtige, organische Bestandteile. Die erfindungsgemäßen Zubereitungen sind vorzugsweise auch frei von niedermolekularen Weichmachern.

Der Begriff Glasübergangstemperatur meint in dieser Schrift die nach dem DSC-Verfahren (Differential Scanning Calorimetry, 20°C/min, midpoint) ermittelte Glasübergangstemperatur (vgl. ASTM D 3418-82).

Die Glasübergangstemperatur $T_G1$ der Polymere 1 (bzw. $T_Gi$ der Polymere i) kann auch anhand der jeweiligen Monomerzusammensetzung des Polymers abgeschätzt werden. Nach Fox (T.G. Fox, Bull. Am. Phys. Soc. (Ser. II) 1, 123 [1956] und Ullmann's Enzyklopädie der technischen Chemie, 4. Auflage, Band 19, Verlag Chemie, Weinheim (1980), S. 17, 18) gilt für die Glasübergangstemperatur von Mischpolymerisaten bei großen Molmassen in guter Nährung

$$\frac{1}{T_G} = \frac{X^1}{T_G^1} + \frac{X^2}{T_G^2} + \cdots \frac{X^n}{T_G^n}$$

wobei $X^1, X^2, \ldots, X^n$ die Massenbrüche der Monomeren 1, 2, ..., n und $T_G^1$,' $T_G^2, \ldots, T_G^n$ die Glasübergangstemperaturen der jeweils nur aus einem der Monomeren 1, 2, .... n aufgebauten Polymeren in Grad Kelvin bedeuten. Quellen für tabellierte Glasübergangstemperaturen von Homopolymeren sind z. B. Ullmann's Encyclopedia of Industrial Chemistry, 5th ed., VCH, Weinheim, Vol. A 21 (19.92) S. 169 und J. Brandrup, E.H. Immergut, Polymer Handbook 2nd ed, J. Wiley, New York 1975, pp 139-192.

Die Mindestfilmbildetemperatur, d.h. die Temperatur unterhalb derer die Polymerteilchen des Polymers A keinen

stabilen Film bilden und daher mit dem Pigment und den Füllstoffen keine stabile Beschichtung bilden, korreliert näherungsweise mit der Glasübergangstemperatur $T_G1$ des Polymers 1, wobei die Mindestfilmbildetemperatur in der Regel unterhalb der Glasübergangstemperatur $T_G1$ des Polymers 1 liegt. Um eine problemlose Verarbeitung auch bei niedrigen Umgebungstemperaturen zu gewährleisten, weist das Polymer A in den erfindungsgemäßen Zubereitungen eine Mindestfilmbildetemperatur in der Regel unterhalb von 10 °C, vorzugsweise unterhalb 5 °C auf. Dementsprechend wählt man die Glasübergangstemperatur des Polymers 1 vorzugsweise ≤ 20 °C und insbesondere ≤ 10 °C. Sofern erhöhte Verarbeitungstemperaturen möglich sind, beispielsweise in Regionen mit erhöhter Umgebungstemperatur, kann das Polymer A in der erfindungsgemäßen Zubereitung selbstverständlich auch eine höhere Mindestfilmbildetemperatur aufweisen, z.B 30 °C, entsprechend einer $T_G1$ im Bereich von 20 bis 40 °C. Vorzugsweise wird TG1 einen Wert von -40 °C, insbesondere -25 °C nicht unterschreiten, um eine hinreichende Härte und Festigkeit des Polymerfilms zu gewährleisten.

Ferner ist es von Vorteil, wenn der Wert $\Delta T_G = T_Gi - T_G1 > 40$ K und speziell > 50 K ist. $\Delta T_G$ kann bis zu 150 K betragen und liegt ganz besonders bevorzugt im Bereich von 60 bis 120 K.

Das in der erfindungsgemäßen Zubereitung enthaltene, teilchenförmigen Polymer A umfasst erfindungsgemäß neben dem Polymer 1 ein odere mehrere Polymere i, vorzugsweise genau ein Polymer i. In besonders bevorzugten Ausführungsformen enthalten die Polymere A > 90 bis 99 Gew.-%, insbesondere 92 bis 98 Gew.-% eines Polymers 1 und 1 bis < 10 Gew.-%, insbesondere 2 bis 8 Gew.-% eines Polymers i. Sowohl das Polymer 1 als auch die Polymere i sind überwiegend aus monoethylenisch ungesättigten, hydrophoben Monomeren MH, aufgebaut und daher in Wasser nicht löslich. In der Regel umfassen die das Polymer 1 konstituierenden Monomere M1 als auch die das Polymer i konstituierenden Monomere Mi wenigstens 80 Gew.-% vorzugsweise wenigstens 90 Gew.-% und insbesondere wenigstens 95 Gew.-% hydrophobe Monomere MH, d.h. Monomere mit einer Wasserlöslichkeit unterhalb 50 g/l bei 25 °C.

Typische Monomere MH sind vinylaromatische Monomere, wie Styrol, α-Methylstyrol, α-Phenylstyrol, o-Chlorstyrol oder vinyltoluole, Vinylester von aliphatischen $C_1$-$C_{18}$-Monocarbonsäuren, wie Vinylacetat, Vinylpropionat, Vinylbutyrat, Vinylvalerat, Vinylpivalat, Vinylhexanoat, Vinyl-2-ethylhexanoat, Vinyldecanoat, Vinyllaurat, Vinylstearat sowie im Handel befindliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden) sowie die Ester ethylenisch ungesättigter $C_3$-$C_8$-Mono- oder Dicarbonsäuren, wie Acrylsäure, Methacrylsäure, Crotonsäure, Maleinsäure, Itaconsäure, Citraconsäure und Fumarsäure mit $C_1$-$C_{18}$-, vorzugsweise $C_1$-$C_{12}$- und insbesondere $C_1$-$C_8$-Alkanolen oder $C_5$-$C_{10}$-Cycloalkanolen. Geeignete $C_1$-$C_{18}$-Alkanole sind beispielsweise Methanol, Ethanol, n-Propanol, i-Propanol, 1-Butanol, 2-Butanol, Isobutanol, tert.-Butanol, n-Hexanol, 2-Ethylhexanol, Laurylalkohol und Stearylalkohol. Geeignete Cycloalkanole sind beispielsweise Cyclopentanol, Cyclohexanol, 4-tert.-Butylcyclohexan-1-ol, 3,3,5-Trimethylcyclohexan-1-ol und Isoborneol. Speziell handelt es sich um die Ester der Acrylsäure und/oder der Methacrylsäure, wie Methylmethacrylat, Ethylacrylät, Ethylmethacrylat, n-Butylacrylat, n-Butylmethacrylat, Isobutylacrylat, Isobutylmethacrylat, tert.-Butylacrylat, tert.-Butylmethacrylat, Hexylacrylat, Hexylmethacrylat, n-Octylacrylat, n-Octylmethacrylat, 2-Ethylhexylacrylat, 2-Ethylhexylmethacrylat, Decylacrylat, Laurylacrylat, Stearylacrylat, iso-Bornylacrylat, iso-Bornylmethacrylat, Norbornylacrylat, Norbornylmethacrylat, 4-tert.-Butylcyclohexylacrylat, 4-tert.-Butylcyclohexylmethacrylat, 3,3,5-Trimethylcyclohexylacrylat, 3,3,5-Trimethylcyclohexylmethacrylat, sowie ferner um die Ester der Fumarsäure und der Maleinsäure, z. B. Fumarsäuredimethylester, Maleinsäuredimethylester oder Maleinsäuredi-n-butylester. Darüber hinaus können auch α-Olefine, wie Ethylen, Propen und Isobuten sowie Vinylchlorid oder Vinylidenchlorid als Comonomere eingesetzt werden. Die hydrophoben Monomere $M_H$ umfassen in untergeordnetem Maße auch ethylenisch ungesättigte Nitrile wie Acrylnitril und Methacrylnitril.

vorzugsweise sind die hydrophoben Monomere MH ausgewählt unter den oben genannten vinylaromatischen Monomeren, den vorgenannten Estern der Acrylsäure und der Methacrylsäure mit $C_1$-$C_{12}$-Alkanolen oder $C_5$-$C_{10}$-Cycloalkanolen. Ein Teil der vorgenannten hydrophoben Monomere, vorzugsweise jedoch nicht mehr als 50 Gew.-%, insbesondere nicht mehr als 30 Gew.-%, kann durch ein ethylenisch ungesättigtes Nitril, z.B. Acrylnitril oder Methacrylnitril, ersetzt sein.

Die Monomere M1 und Mi können weiterhin Monomere mit einer erhöhten wasserlöslichkeit, d.h. > 100 g/l (bei 25 °C) umfassen (Monomere MW). Monomere MW werden üblicherweise in Mengen von 0,1 bis 10 Gew.-% vorzugsweise in Mengen von 0,2 bis 5 Gew.-%, bezogen auf das Gesamtgewicht der Monomere M1 und Mi, eingesetzt. Vorzugsweise umfassen die Monomere Mi keine Monomere MW. Zu den Monomeren MW zählen monoethylenisch ungesättigte $C_3$-$C_8$-Monocarbonsäuren, wie Acrylsäure, Methacrylsäure, Crotonsäure, vinylessigsäure, Acrylamidoglykolsäure und Methacrylamidoglykolsäure, monoethylenisch ungesättigten $C_4$-$C_8$-Dicarbonsäuren, wie Maleisäure, Itaconsäure und Citraconsäure, deren Halbester mit $C_1$-$C_{12}$-Alkanolen, wie Monomethylmaleinat und Mono-n-butylmaleinat, ethylenisch ungesättigte Sulfonsäuren, wie Vinylsulfonsäure, 2-Acrylamido-2-methylpropansulfonsäure, 2-Acryloyloxyethansulfonsäure und 2-Methacryloyloxyethansulfonsäure, 3-Acryloyloxy- und 3-Methacryloyloxypropansulfonsäure, Vinylbenzolsulfonsäure und deren Salze, vorzugsweise deren Alkalimetallsalze oder deren Ammoniumsalze und insbesondere deren Natriumsalze. Zu den Monomeren MW zählen weiterhin neutrale Monomere, z.B. die Amide ethylenisch ungesättigter Monocarbonsäuren wie Acrylamid und Methacrylamid, die Hydroxyalkylester der vorgenannten ethylenisch

ungesättigten Mono- und Dicarbonsäuren, z. B. Hydroxyethylacrylat, Hydroxypropylacrylat, 4-Hydroxybutylacrylat, die entsprechenden Methacrylate und wasserlösliche N-Vinyllactame, z. B. N-Vinylpyrrolidon. Bevorzugte Monomere MW sind Acrylsäure, Methacrylsäure, Itaconsäure, Acrylamid und Methacrylamid.

Die Monomere M1 und Mi können weiterhin Monomere mit zwei oder mehren, nicht konjugierten, ethylenisch ungesättigten Doppelbindungen umfassen, z.B. die Diester zweiwertiger oder höherwertiger Alkohole mit $\alpha,\beta$-monoethylenisch ungesättigten $C_3$-$C_8$-Carbonsäuren, z. B. Glykolbisacrylat, Diethylenglykolbisacrylat, 1,6-Hexandiolbisacrylat oder Ester von $\alpha,\beta$-monoethylenisch ungesättigten Carbonsäuren mit Alkenolen, z. B. Vinylacrylat, Allylacrylat, Bicyclodecenylacrylat und entsprechende Methacrylate, ferner Divinylbenzol, N,N'-Divinylharnstoff, N,N'-Divinylimidazolinon und Diallylphthalat. Derartige Monomere werden, sofern erwünscht, in untergeordneter Menge, d. h. in Mengen von 0,01 bis 2 Gew.-% bezogen auf die Gesamtmonomermenge, verwendet. Vorzugsweise umfassen die Monomere M1 keine derartigen Monomere.

Vielfach ist es günstig, wenn die Monomere M1 und/oder die Monomere Mi in untergeordneten Mengen, z.B. in Mengen von 0,1 bis 10 Gew.-%, solche Monomere aufweisen, die erst während der Filmbildung eine Vernetzung bedingen. Beispielhaft genannt seien Carbonylgruppen aufweisende Monomere wie Acrolein, Methacrolein, Diacetonacrylamid und -methacrylamid sowie Acetessigsäurevinylester. Vorgenannte Monomere bewirken z.B. dann eine Nachvernetzung, wenn die wäßrige Polymerisatdispersion gleichzeitig eine entsprechende Menge einer Polyaminverbindung zugesetzt enthält. Als solche eignen sich insbesondere die Dihydrazide von 2 bis 10 C-Atome aufweisenden aliphatischen Dicarbonsäuren. Beispiele hierfür sind Oxalsäuredihydrazid, Malonsäuredihydrazid, Bernsteinsäuredihydrazid, Glutarsäuredihydrazid, Adipinsäuredihydrazid oder Sebacinsäuredihydrazid. Ein anderes Nachvernetzung bedingendes Monomer ist z.B. 2-Acetoacetoxyethylmethacrylat (alleine bzw. in Kombination mit Polyaminen oder Polyaldehyden wie Glyoxal). Des weiteren eignen sich zur Nachvernetzung solche Monomere, die hydrolysierbare Si-organische Bindungen aufweisen. Beispielhaft genannt seien die copolymerisierbaren Monomere Methacryloyloxypropyltrimethoxysilan und Vinyltrimethoxysilan. Weitere geeignete Monomere entsprechender Art finden sich in der DE-A 43 41 260. Weisen die dispergierten Polymerisatpartikel Carboxylgruppen auf, läßt sich eine Nachvernetzung auch durch Zusatz von mehrwertige Kationen aufweisenden Metallsalzen bewirken (z.B. Mg-, Ca-, Zn- oder Zr-Salze). Auch eignen sich Epoxy- und/oder N-Alkylolgruppen aufweisende Monomere wie z.B. Glycidylacrylat, N-Methylolacrylamid und N-Methylolmethacrylamid zum Zweck der Nachvernetzung. Nachvernetzung läßt sich auch durch Copolymerisation von geringen Mengen an ungesättigten Benzophenon- oder Acetophenonderivaten und spätere Photoinitiierung erzielen. Alternativ können auch entsprechende, gesättigte Benzophenon- oder Acetophenonderivate in die erfindungsgemäßen Zubereitungen eingerührt werden.

Ferner können das Monomere M1 und/oder die Monomere Mi in untergeordneten Mengen, z.B. 0,1 bis 5 Gew.-%, Haftmonomere (z.B. Stickstoff enthaltende Monomere) umfassen, um die Haftung des Films der resultierenden wäßrigen Polymerisatdispersion auf zahlreichen Materialien wie Holz, Metall, Mineralien, Papier, Textilien und Kunststoff, insbesondere aber auf alten Anstrichen auf der Basis trocknender Öle und/oder Alkydharze, zu erhöhen und die Empfindlichkeit der Haftung gegenüber der Einwirkung von Feuchtigkeit und Nässe zu mindern (erhöhte Naßhaftung). Als Stickstoff enthaltende Haftmonomere kommen insbesondere radikalisch polymerisierbare Monomere mit wenigstens einer Amino-, Harnstoff, oder N-heterocyclischen Gruppen in Betracht. Eine Vielzahl solcher geeigneter Haftmonomeren findet man in der EP-B 421 185, in der EP-B 379 892 auf Seite 3, in der EP-A 609 756 auf Seite 2, in der DE-A 43 34 178 und in der DE-A 39 02 067 auf den Seiten 3/4.

Beispielhaft genannt seien Aminoethylacrylat und -methacrylat, Dimethylaminoethylacrylat und -methacrylat, Diethylaminoethylacrylat und -methacrylat, Dimethylaminopropylacrylat und -methacrylat, 3-Dimethylamino-2,2-dimethylpropyl-1-acrylat und -methacrylat, 2-N-Morpholinoethylacrylat und -methacrylat, 2-N-Piperidinoethylacrylat und -methacrylat, N-(3-Dimethylaminopropyl)acrylamid und -methacrylamid, N-Dimethylaminoethylacrylamid und -methacrylamid, N-Diethylaminoethylacrylamid und -methacrylamid, N-(4-Morpholinomethyl)acrylamid und -methacrylamid, Vinylimidazol sowie monoethylenisch ungesättigte Derivate des Ethylenharnstoffs (= Imidazolidin-2-on) wie N-(2-Acryloyloxyethyl)imidazolidin-2-on, N-($\beta$-Acrylamidoethyl)imidazolidin-2-on, N-2-(Allylcarbamato)aminoethylimidazolidin-2-on, N-[(3-Allyloxy-2-hydroxypropyl)aminoethyl]imidazolidin-2-on, N-Vinylimidazolidin-2-on, N-(Methacryloxyacetoxyethyl)imidazolidin-2-on, N-(Acrylamidoethylen)imidazolidin-2-on, N-(Methacrylamidoethylen)imidazolidin-2-on, 1-(2-Meth-acryloyloxyethyl)imidazolidin-2-on und N-(Methacrylamidoethyl)imidazolidin-2-on. Monomere mit Amino- oder Harnstoffgruppen können mit niedermolekularen Di- oder Polyaldehyden, z. B. mit aliphatischen Dialdehyden wie Glyoxal, nachvernetzt werden.

In einer bevorzugten Ausführungsform der Erfindung umfassen die Monomere MH:

- 20 bis 80 Gew.-%, insbesondere 50 bis 70 Gew.-%, bezogen auf die Monomere MH, wenigstens eines Monomers MHa, dessen Homopolymerisat eine Glasübergangstemperatur unterhalb 10 °C aufweist, und

- 20 bis 80 Gew.-%,insbesondere 30 bis 50 Gew.-%, bezogen auf die Monomere MH, wenigstens eines Monomers MHb, dessen Homopolymerisat eine Glasübergangstemtperatur oberhalb 30 °C aufweist.

Bevorzugte Monomere MHa sind die Ester der Acrylsäure mit $C_1$-$C_{12}$-Alkanolen, insbesondere n-Butylacrylat, 2-Ethylhexylacrylat, Vinylester von aliphatischen Carbonsäuren, Ethylen und deren Mischungen; bevorzugte Monomere MHb sind die Ester der Methacrylsäure mit $C_1$-$C_4$-Alkanolen, Styrol, α-Methylstyrol und Acrylnitril.

Vorzugsweise umfassen die das Polymer i konstituierenden Monomere Mi nur hydrophobe Monomere MH, wobei der Anteil ethylenisch ungesättigter Nitrile in der Regel unterhalb 50 Gew.-%, vorzugsweise unterhalb 30 Gew.-%, bezogen auf die Monomere Mi, beträgt. Die Monomere Mi umfassen als hydrophobe Monomere MH vorzugsweise Methylmethacrylat, tert.-Butylacrylat, n-Butylmethacrylat, Isobutylmethacrylat, tert.-Butylmethacrylat, iso-Bornylacrylat, iso-Bornylmethacrylat, 4-tert.-Butylcyclohexylacrylat, 4-tert.-Butylcyclohexylmethacrylat, 3,3,5-Trimethylcyclohexylacrylat, 3,3,5-Trimethylcyclohexylmethacrylat, Styrol, α-Phenylstyrol, α-Methylstyrol, Acrylnitril und deren Mischungen.

Eine spezielle Ausführungsform der vorliegenden Erfindung betrifft pigmenthaltige Zubereitungen, worin die Polymerteilchen des Polymers A aufgebaut sind aus:

i. 80 bis 90 Gew.-% eines Polymers 1, aufgebaut aus

- 30 bis 49,9 gew.-% Methylmethacrylat, Styrol oder deren Mischungen,
- 50 bis 69,9 Gew.-% n-Butylacrylat, 2-Ethylhexylacrylat oder deren Mischungen, und
- 0,2 bis 3 Gew.-% wenigstens eines Monomers MW, und

ii. 0,1 bis 20 Gew.-% eines Polymers i aufgebaut aus wenigstens einem Ester der Acrylsäure mit einem $C_1$-$C_4$-Alkanol, tert.-Butylacrylat, Styrol oder Mischungen der vorgenannten Monomere.

Ferner hat es sich als vorteilhaft erwiesen, wenn die Polymerisatteilchen des Polymers A einen gewichtsmittleren Polymerisatteilchendurchmesser im Bereich von 50 bis 1000 nm aufweisen (bestimmt mittels Ultrazentrifüge oder Photonenkorrelationsspektroskopie; zur Teilchengrößenbestimmung mittels Ultrazentrifuge siehe z. B. W. Mächtle, Makromolekulare Chemie, 1984, Bd. 185, 1025 - 1039, W. Mächtle, Angew. Makromolekulare Chemie, 1988, 162, 35-42). Bei Bindemitteldispersionen mit hohen Feststoffgehalten, z. B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 150 nm ist. Der mittlere Teilchendurchmesser wird in der Regel 1 0.00 nm und vorzugsweise 600 nm nicht überschreiten. Ferner ist es von Vorteil, wenn die individuellen Teilchendurchmesser der Polymerisatteilchen nicht einheitlich sind sondern über einen größeren Durchmesserbereich verteilt sind.

Die Herstellung der erfindungsgemäßen Polymere A erfolgt durch ein mehrstufiges, radikalisches Emulsionspolymerisationsverfahren in einem wässrigen Polymerisationsmedium. Hierzu wird in einer ersten Polymerisationsstufe das Polymer 1 durch radikalische wässrige Emulsionspolymerisation der Monomere M1 hergestellt. In der so erhaltenen wässrigen Dispersion des Polymeren 1 wird dann in einer zweiten Polymerisationsstufe ein erstes Polymer i durch Polymerisation einer ersten Charge der Monomere Mi hergestellt. Die zweite Polymerisationsstufe erfolgt somit als radikalische wässrige Emulsionspolymerisation der Monomere Mi in Gegenwart des in der ersten Polymerisationsstufe hergestellten Polymers 1. Dieser zweiten Polymerisationsstufe können weitere Polymerisationsstufen folgen, bei denen weitere Chargen der Monomere Mi, die in ihrer Zusammensetzung von der ersten Charge der Monomere Mi abweichen können, in Gegenwart des Polymerisats der vorangegangenen Polymerisationsstufe polymerisiert werden. Verfahren hierzu sind aus dem Stand der Technik bekannt, beispielsweise aus der US-A 3 562 235, EP-A 600 478, EP-A 609 756 und EP-A 612 805.

Das in den erfindungsgemäßen Zubereitungen enthaltene Polymer A wird durch eine mehrstufige, radikalische Emulsionspolymerisation im Sinne einer Quellungspolymerisation hergestellt (sogenannte Quellungspolymerisate). Derartige Quellungspolymerisate beziehungsweise die daraus erhältlichen Polymerfilme zeichnen sich durch besonders günstige mechanische Eigenschaften und durch eine besonders geringe Neigung zum Anschmutzen aus. Zur Herstellung der Quellungspolymerisate wird in einer ersten Stufe in konventioneller Weise eine wässrige Dispersion des Polymeren 1 durch radikalische wässrige Emulsionspolymerisation hergestellt. In weiteren Polymerisationsstufen werden dann die Polymere i durch radikalische wässrige Emulsionspolymerisation der Monomere Mi in Gegenwart des Polymers 1 hergestellt, wobei die Monomere Mi, die in der jeweiligen Stufe i polymerisiert werden, dem Polymerisationsgefäß so zugegeben werden, daß sich ein signifikanter Teil von ihnen in den bereits im Polymerisationsgefäß befindlichen Polymeren 1, (bzw. in dem Polymer der jeweiligen vorangegegangenen Polymerisationsstufe) zu lösen oder diese zu quellen vermag. Die Monomere Mi werden somit polymerisiert, während sie in den dispergierten Polymerisatteilchen in gelöster bzw. gequollener Form vorliegen (d.h., nach Quellung des dispergierten Polymeren P1) polymerisiert. Das Verfahren der Quellungspolymerisation ist ausführlich in der WO 98/10001 beschrieben.

Die Quellung der Polymere 1 durch die Monomere i wird dadurch erreicht, daß die Polymerisation der Monomere M1 vor Beginn der Zugabe der Monomere i in der zweiten Polymerisationsstufe im wesentlichen abgeschlossen ist und die Zugabe der Monomere Mi in der zweiten und gegebenenfalls in den weiteren Polymerisationsstufen so erfolgt, daß

während der Zugabe der Monomere Mi der Polymerisationsumsatz $U^i$ der in der jeweiligen Polymerisationsstufe zu polymerisierenden Monomere Mi zu keinem Zeitpunkt 50 mol-%, vorzugsweise 40 mol-%, insbesondere 30 mol-%, besonders bevorzugt 20 mol-%, bzw. 10 mol-% oder 5 mol-% überschreitet. Besonders günstig ist es, vor der Zugabe der in einer Stufe i zu polymerisierenden Monomeren Mi die Polymerisation weitgehend zu unterbrechen und die Polymerisation erst nach Zugabe der Gesamtmenge der in der Stufe i zu polymerisierenden Monomeren Mi erneut zu starten. Dabei kann die Gesamtmenge der in der Stufe i zu polymerisierenden Monomeren Mi entweder auf einmal oder portionsweise ins Polymerisationsgefäß gegeben werden. Eine Unterbrechung der Polymerisation kann durch Maßnahmen wie Temperaturerniedrigung, Zusatz von Polymerisationsinhibitoren (Radikalfänger wie z.B. Hydrochinon). Initiatorverbrauch etc. bewirkt werden.

Die Quellung der bereits im Polymerisationsgefäß im wäßrigen Medium in disperser Verteilung befindlichen Polymerisatteilchen durch die an einer Polymerisationsstufe i zu polymerisierenden Monomere Mi wird dadurch erleichtert, daß man die Monomere Mi nicht in wäßrigem Medium voremulgiert, sondern in reiner Form zugibt. Ferner ist es von Vorteil, wenn die Zugabe bei im wesentlichen unterbrochener Polymerisation bei erhöhter Temperatur, z.B. bei 30 bis 80 °C erfolgt und/oder man die Polymerisation der Monomere Mi erst nach Ablauf einer Zeitspanne nach Zugabe der Monomere Mi, beispielsweise nach einigen Minuten bis Stunden startet. Wegen weiterer Details sei hier auf die WO 98/10001 verwiesen.

Die Herstellung des Polymerisats 1 erfolgt (unabhängig von der Herstellungsweise des Polymers i) üblicherweise nach der Methode der radikalischen wäßrigen Emulsionspolymerisation, d.h., im Beisein von Dispergiermittel und wenigstens einem radikalischen Polymerisationsinitiators.

Als Dispergiermittel kommen sowohl die zur Durchführung von radikalischen wäßrigen Emulsionspolymerisationen üblicherweise eingesetzten Schutzkolloide als auch Emulgatoren in Betracht. Dispergiermittel werden üblicherweise in Mengen von 0,1 bis 10 Gew.-%, vorzugsweise 0,5 bis 5 Gew.-%, bezogen auf die Gesamtmenge der zu polymerisierenden Monomere M1, verwendet.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

vorzugsweise werden als Dispergiermittel ausschließlich Emulgatoren eingesetzt, deren relative Molekulargewichte im Unterschied zu den Schutzkolloiden üblicherweise unter 2000 liegen. Sie können sowohl anionischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Auf die Eigenschaften der erfindungsgemäßen Zubereitungen wirkt sich die Verwendung von Verbindungen der allgemeinen Formel I,

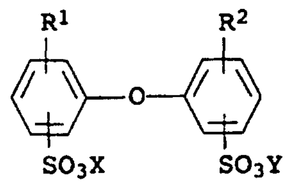

(I)

worin $R^1$ und $R^2$ Wasserstoff oder $C_4$-$C_{24}$-Alkyl, vorzugsweise $C_8$-$C_{16}$-Alkyl bedeuten und nicht gleichzeitig Wasserstoff sind, und X und Y Alkalimetallionen und/oder Ammoniumionen sein können, als Dispergiermittel besonders vorteilhaft aus. Häufig werden technische Gemische von Verbindungen der allgemeinen Formel I verwendet, die einen Anteil von 50 bis 90 Gew.-% des monoalkylierten Produktes aufweisen, beispielsweise Dowfax® 2A1 ($R^1$ = $C_{12}$-Alkyl; DOW CHEMICAL). Die Verbindungen I sind allgemein bekannt, z. B. aus der US-A-4,269,749, und im Handel erhältlich.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxylierungsgrad von 8 bis 50.

Vorzugsweise werden Kombinationen aus wenigstens einem anionischen Emulgator, z.B. eine Verbindung der allgemeinen Formel I, und wenigstens einem nichtionischen Emulgator, z.B das Ethoxylat eines langkettigen Alkanols (Alkylrest: $C_{10}$-$C_{22}$, mittlerer Ethoxylierungsgrad: 3 bis 50), für die Herstellung der Polymere 1 eingesetzt.

Weitere geeignete Emulgatoren finden sich in Houben-Weyl, Methoden der organischen Chemie, Band XIV/1,

Makromolekulare Stoffe, Georg-Thieme-Verlag, Stuttgart, 1961, S. 192-208.

Für die Herstellung des Polymeren 1 kommen als radikalische Polymerisationsinitiatoren grundsätzlich sowohl Peroxide, z. B. Wasserstoffperoxid, organische Peroxide wie Dibenzoylperoxid, Dilaurylperoxid und Diacetylperoxid, und Hydroperoxide wie Pinanhydroperoxid, p-Menthanhydroperoxid, Diisopropylphenylhydroperoxid, Cumolhydroperoxid und tert.-Butylhydroperoxid, Persäuren wie Peroxopivalat, Alkalimetall- und Ammoniumperoxodisulfate wie Natriumperoxodisulfat oder Ammoniumperoxodisulfat als auch Azoverbindungen in Betracht. Bevorzugt werden Redoxinitiatorsysteme verwendet, die aus wenigstens einem organischen Reduktionsmittel und wenigstens einem Peroxid, einem Hydroperoxid oder einer Persäure zusammengesetzt sind. Als Reduktionsmittel kommen insbesondere Schwefelverbindungen wie das Natriumsalz der Hydroxymethansulfinsäure, Natriumsulfit, Natriumdisulfit, Natriumthiosulfat oder Acetonbisulfit-Addukt, Stickstoff enthaltende Verbindungen wie Triethylamin, Hydrazin und Hydroxylamin, weiterhin Ascorbinsäure, Glykolsäure und Weinsäure in Frage. Bevorzugt werden auch solche Redoxinitiatorsysteme, die eine geringe Menge einer im Polymerisationsmedium löslichen Metallverbindung enthalten, deren metallische Komponente in mehreren Wertigkeitsstufen auftreten kann, z. B. Vanadiumsulfat, Eisen(II)sulfat oder Eisenkomplexe, z.B den Komplex aus Eisen mit Ethylendiamintetraessigsäure (als Natriumsalz: Na-Fe-EDTA). Vorzugsweise beträgt die Menge der eingesetzten radikalischen Initiatoren, bezogen auf die Gesamtmenge der zu polymerisierenden Monomere, 0,1 bis 2 Gew.-%.

Bei der Polymerisation der Monomere M1 können Regler eingesetzt werden, z.B. in Mengen von 0 bis 1 Gew.-Teile, bezogen auf 100 Gew.-Teile der zu polymerisierenden Monomere M1, durch die die Molmasse verringert wird. Geeignet sind z.B. Verbindungen mit einer Thiolgruppe wie tert. Butylmercaptan, Thioglykolsäureethylester, Mercaptoethanol, Mercaptopropyltrimethoxysilan oder tert. Dodecylmercaptan. Vorzugsweise wird kein Regler verwendet.

Polymerisationsdruck und Polymerisationstemperatur sind im Rahmen der Herstellung des Polymerisats 1 von eher untergeordneter Bedeutung. Im allgemeinen arbeitet man bei Temperaturen von 0°C bis 100°C, häufig 20°C bis 100°C, meist 50 bis 95°C. Die Anwendung von vermindertem oder erhöhtem Druck ist möglich, so daß die Polymerisationstemperatur auch 100°C überschreiten und bis zu 130°C und mehr betragen kann. Vorzugsweise werden leichtflüchtige Monomere wie Ethylen oder Butadien unter erhöhtem Druck polymerisiert. Zur Regulierung des pH-Wertes des Polymerisationsmediums können während der radikalischen wäßrigen Emulsionspolymerisation zur Herstellung des Polymers 1 Puffer wie $NaHCO_3$, $Na_2CO_3$, Na-Acetat oder $Na_4P_2O_7$ zugesetzt werden.

Zur Verbesserung der Reproduzierbarkeit und Einstellung definierter Teilchendurchmesser können im Rahmen der Herstellung des Polymerisats 1 die Polymerteilchenbildungsphase von Polymerteilchenwachstumsphase in dem Fachmann an sich bekannter Weise dadurch entkoppelt werden, daß man eine definierte Menge einer vorgebildeten wäßrigen Polymerisatdispersion (einen Saatlatex) ins Polymerisationsgefäß vorlegt oder in selbigem eine solche in situ vorbildet.

In besonders einfacher Weise läßt sich die radikalische wäßrige Emulsionspolymerisation zur Herstellung einer wäßrigen Dispersion eines Polymerisats 1 wie folgt durchführen: Die zu polymerisierenden Monomeren werden in wäßrigem Medium emulgiert und der radikalische Polymerisationsinitiator wird in Wasser gelöst. Im Polymerisationsgefäß wird Wasser vorgelegt und auf die Polymerisationstemperatur erwärmt. Dann werden ein Teil der wäßrigen Monomerenemulsion und ein Teil der wäßrigen Initiatorlösung der Vorlage auf einmal zugefügt und polymerisiert. Danach werden dem Polymerisationsgefäß unter Aufrechterhaltung der Polymerisation die Restmenge der wäßrigen Monomerenemulsion und die Restmenge der wäßrigen Initiatorlösung, vorzugsweise im wesentlichen synchron, kontinuierlich zugeführt. Nach beendeter Initiator- und Monomerenzufuhr wird man das Polymerisationsgemisch unter Aufrechterhaltung der Polymerisationstemperatur zweckmäßigerweise noch einige Zeit unter Rühren sich selbst überlassen.

Zur Durchführung der anschließenden Polymerisationsstufen i wird man danach die in der Stufe i zu polymerisierenden Monomeren dem Polymerisationsgefäß in der oben beschriebenen Weise, z.B. kontinuierlich, portionsweise oder in einer Portion, für sich oder in Form einer wässrigen Emulsion zugeben. Die Zugabe der Monomere i erfolgt vorzugsweise für sich und auf einmal. Besonders bevorzugt wird vor der zugabe der Monomere Mi die Temperatur im Polymerisationsreaktor abgesenkt, so daß die Polymerisationsreaktion zum Erliegen kommt. Mit Vorteil wird der Emulgatorgehalt der wäßrigen Dispersion des Polymerisats 1 dabei so beschaffen sein, daß das wäßrige Dispergiermedium im wesentlichen keine Emulgatormicellen aufweist. Dann wird man den mit Vorteil gekühlten Reaktorinhalt zweckmäßigerweise unter Rühren in der Regel einige Zeit sich selbst überlassen, um die Quellung zu begünstigen. Danach wird man normalerweise frischen radikalischen Polymerisationsinitiator zugeben und anschließend auf die Polymerisationstemperatur erwärmen und wie gewünscht polymerisieren. In entsprechender Weise können bei Bedarf weitere Polymerisationsstufen i angeschlossen werden.

Als radikalische Polymerisationsinitiatoren kann man für die Initiierung der Polymerisationsstufen i prinzipiell alle diejenigen einsetzen, die bereits im Rahmen der Herstellung der Dispersion des Polymerisats 1 genannt worden sind. Bevorzugt werden jedoch solche radikalischen Initiatorsystem eingesetzt, die organische Peroxide oder organische Hydroperoxide umfassen, insbesondere Redoxinitiatorsysteme auf Basis organischer Peroxide und/oder Hydroperoxide. Vor allem tert.-Butylhydroperoxid sowie Cumolhydroperoxid umfassende radikalische Initiatorsysteme sind geeignet. Als reduzierend wirkende Partner kommen insbesondere Alkalimetallsulfite, Ascorbinsäure, Acetonbisulfit sowie die

Alkalimetallsalze der Hydroxyrnethansulfinsäure in Betracht. Bezogen auf die in einer Polymerisationsstufe i zu polymerisierenden Monomeren wird man in der Regel 0,1 bis 2 Gew.-% an radikalischem Polymerisationsinitiator zusetzen. Infolge der bevorzugten Verwendung von organischen Redoxinitiatorsystemen in den Polymerisationsstufen i wird die zugehörige Polymerisationstemperatur im Normalfall unterhalb von 80°C (meist ≥50°C bis ≤80°C) liegen. Hinsichtlich des Polymerisationsdrucks gilt das bezüglich der Herstellung des polymerisats 1 gesagte.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423 aufgeführt sind, erfolgen. Bevorzugt wird die Nachpolymerisation mit einem Redoxinitiatorsystem aus wenigstens einem organischen Peroxid und einem organischen Sulfit durchgeführt.

Vorzugsweise werden die Dispersionen des Polymers A vor ihrem Einsatz in den erfindungsgemäßen Zubereitungen, vorzugsweise duch Zugabe einer nichtflüchtigen Base, z.B. Alkalimetall- oder Erdalkalimetallhydroxiden oder nichtflüchtigen Aminen, auf einen pH-Wert im Bereich von pH 6 bis pH 10 eingestellt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die erfindungsgemäßen Zubereitungen Polymerisatdispersionen mit Feststoffgehalten im Bereich von 40 bis 70 Gew.-% bevorzugt. Besonders bevorzugt werden Dispersionen mit Polymergehalten von etwa 50 bis 60 Gew.-%. Natürlich sind auch Dispersionen mit geringeren Feststoffgehalten prinzipiell für die erfindungsgemäßen Zubereitungen einsetzbar.

Eine bevorzugte Ausführungsform der vorliegenden Erfindung betrifft Zubereitungen in Form von Dispersionsfarben.

Die erfindungsgemäßen Zubereitungen, insbesondere die Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa

i 3 bis 90 Gew.-%, vorzugsweise 10 bis 60 Gew.-%, auf feste Bindemittelbestandteile (= Polymer A)

ii 5 bis 85 Gew.-%, vorzugsweise 10 bis 60 Gew.-%, auf wenigstens ein Pigment,

iii 0 bis 85 Gew.-%, vorzugsweise 20 bis 70 Gew.-%, auf einen oder mehrere Füllstoffe und

iv 0,1 bis 40 Gew.-%, vorzugsweise 0,5 bis 15 Gew.-%, auf übliche Hilfsmittel.

In der Regel wird das Gewichtsverhältnis von Polymer A zur Gesamtmasse aus Pigment und Füllstoff in der erfindungsgemäßen Zubereitung im Bereich von 3:1 (entsprechend einer PVK von etwa 10) bis 1:15 (entsprechend einer PVK von etwa 85), vorzugsweise 2:1 bis 1:15 und insbesondere 1:1 bis 1:15 liegt.

In einer bevorzugten Ausführungsform der Erfindung liegt die PVK im Bereich von > 40 % bis 60 Gew.-%, z. B. bei etwa 45 Gew.-%. In einer weiteren bevorzugten Ausführungsform der Erfindung ist die PVK > 60 %, vorzugsweise > 70 %, und kann bis zu 85 % betragen.

Typische Pigmente für die erfindungsgemäßen Zubereitungen, insbesondere für Dispersionsfarben, sind beispielsweise Titandioxid, vorzugsweise in der Rutilform, Bariumsulfat, zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Dispersionsputze können auch gröbere Zuschläge, wie Sände oder Sandsteingranulate, enthalten. In Dispersionsfarben werden naturgemäß feinteilige Füllstoffe bevorzugt. Die erfindungsgemäßen Dispersionsfarben zur Modifizierung des Oberflächenglanz und Farbeindrucks des Farbanstrichs auch teilchenförmige, nichtfilmbildende Polymere, z.B. Polystyrol-Dispersionen, enthalten.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln iv. zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0.1 bis 0.6 Gew.-% bezogen auf das Gesamtgewicht der Dispersionsfarbe eingesetzt.

Ferner umfassen die Hilfsmittel iv gegebenenfalls auch Verdikkungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al. in J. Coatings Techn. Vol 69, No. 867, 1997, S. 73 und von R. D. Hester et al. J. Coatings Technology, Vol. 69, No. 864, 1997, 109 beschrieben sind und auf deren Offenbarung hiermit in vollem Umfang Bezug genommen wird.

Beispiele für hydrophob modifizierte Polyetherurethane sind Polymere der allgemeinen Formel II

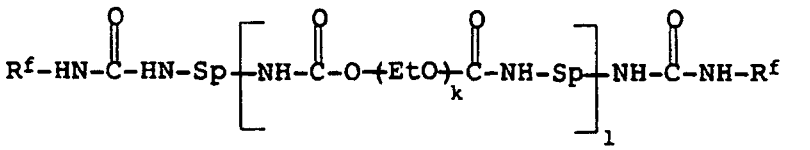

(II)

worin $R^f$ für einen hydrophoben Rest, vorzugsweise einen linearen oder verzweigten Alkylrest mit 10 bis 20 Kohlenstoffatomen, Et für 1,2-Ethylen steht, Sp für $C_2$-$C_{10}$-Alkylen, Cycloalkylen oder Arylen steht, k für eine Zahl im Bereich von 50 bis 1 000 und 1 für eine Zahl im Bereich von 1 bis 10, wobei vorzugsweise das Produkt k x 1 im Bereich von 300 bis 1 000 liegt.

Auch anorganische Verdickungsmittel, z. B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet. Ferner umfassen die Hilfsmittel iv in der Regel auch Entschäumer, Konservierungs- oder Hydrophobiermittel, Biozide oder weitere Bestandteile.

Auch können die Beschichtungsmassen zur Einstellung der Filmbildeeigenschaften der Bindemittelpolymerisate, sog. Filmbildekonsolidierungsmittel (Weichmacher), z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicarbonsäuren, z. B. Texanol® der Eastman, oder technische Gemische von Dibutylestern der Bernsteinsäure, Glutarsäure und Adipinsäure enthalten. Filmbildehilfsmittel werden üblicherweise in einer Menge eingesetzt, dass die Zubereitung eine Mindestfilmbildetemperatur < 15 °C und vorzugsweise im Bereich von 0 bis 10 °C aufweist. Vorzugsweise enthalten die erfindungsgemäßen Zubereitungen kein Filmbildehilfsmittel.

Die erfindungsgemäßen Zubereitungen sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, gestrichene, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von Viskosität und Pigmentgehalt der Zubereitung sowie dem Substrat mittels Rollen, Bürsten, Rakeln oder als Spray erfolgen.

Die unter Verwendung der erfindungsgemäßen Zubereitungen hergestellten Beschichtungen zeichnen sich neben einer hohen Oberflächenhärte, einer verbesserten Elastizität (Reißdehnung und Reißkraft) auch durch eine hohe Nassabriebfestigkeit aus. Eine verbesserte Nassabriebfestigkeit, d. h. eine verbesserte mechanische Stabilität der Beschichtungen gegenüber abrasiven Einflüssen im feuchten Zustand ist für die Witterungsstabilität und die Nassreinigungsbeständigkeit der Beschichtungen günstig und bewirkt somit, dass die Beschichtungen abwaschbar sind. Darüber hinaus sind die Beschichtungen nicht klebrig und zeichnen sich durch eine hohe Blockfestigkeit aus. Die unter Verwendung der erfindungsgemäßen Zubereitungen hergestellten Beschichtungen und Anstriche zeichen sich außerdem durch

eine geringe Anschmutzneigung auch bei längerer Bewitterung aus.

Die vorteilhaften Eigenschaften des Polymers A als Bindemittel gegenüber Bindemittelpolymerisaten aus dem Stand der Technik, insbesondere die verbesserte Nassabriebfestigkeit, macht sich sowohl bei pigmenthaltigen Zubereitungen mit einer PVK < 40 % bemerkbar als auch bei Zubereitungen mit einer PVK > 40 % oder einer PVK > 60 %. Besonders deutlich werden die erfindungsgemäßen Vorteile, wenn die Zubereitungen eine PVK > 40 % und bis zu 85 % aufweisen, z. B. eine PVK von etwa 45 % oder eine PVK von 70 bis 80 %. Demnach betrifft die vorliegende Erfindung auch die Verwendung des Polymers A zur Verbesserung der Nassabriebfestigkeit von pigmenthaltigen Zubereitungen.

Die im Folgenden aufgeführten Beispiele sollen die Erfindung verdeutlichen, ohne sie jedoch einzuschränken.

I. Herstellung und Charakterisierung der Polymerisatdispersionen (Copolymere P)

Teilchendurchmesser

Die Teilchengröße (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Glasübergangstemperatur

Die Bestimmung der Glasübergangstemperatur erfolgte mittels DSC nach der "mid-point" Methode (ASTM-D 3418-82).

Mindestfilmbildetemperatur

Die Bestimmung der Mindestfilmbildetemperatur (MFT) der Polymerisatdispersionen erfolgte in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet. Anhand des bekannten Temperaturprofils der Platte wird die MFT visuell bestimmt.

Reißdehnung und Reißfestigkeit

Zur Bestimmung der mechanischen Eigenschaften des Films der wäßrigen Polymerisatdispersionen wurden diese auf einen Feststoffgehalt von 25 Gew.-% verdünnt. Anschließend wurde eine Probe der so verdünnten wäßrigen Polymerisatdispersion in einer 15 cm x 15 cm x 0,6 cm Form aus Silicon während 2 Wochen bei 23°C und 50 % relativer Luftfeuchtigkeit getrocknet. Die Probenmenge wurde so bemessen, daß die resultierende Filmdicke etwa 0,1 cm betrug. Die Bestimmung von Reißfestigkeit (in MPa) und Reißdehnung erfolgte in Anlehnung an die DIN 53 455 und die DIN 53 504. Die angegebenen Meßwerte sind Mittelwerte aus 5 Messungen an 5 Prüfkörpern. Dazu wurden nach der Ablösung des Films aus der Siliconform aus selbigem die zur Durchführung des Zugversuchs benötigten Probekörper ausgestanzt. Als Probenkörperformat wurde das in DIN 53 504 (s. 2.4.11.6) als Normstab S2 beschriebene Hantelformat angewendet. Die Dicke der Proben wurde mit dem Dickemeßgerät nach DIN 53 370 mit kreisförmiger Tastenform von 10 mm Durchmesser überprüft. Die Probekörper wurden in die Klammern einer Zugprüfmaschine eingespannt und mit einer Abzugsgeschwindigkeit von 250 mm/min gerissen. Die Reißdehnung ist die Dehnung im Augenblick des Reißens. Sie bezieht sich auf 23°C und 1 atm. Ihre Angabe erfolgt als $[(L-L_o)/L_o]x100$ (%), dabei bedeuten:

$L_o$ = die ursprüngliche Meßlänge,
L = die Meßlänge beim Reißen.

In entsprechender weise ist die Reißkraft die im Augenblick des Reißens anzuwendende Kraft. Sie wird üblicherweise auf den Querschnitt bezogen angegeben. Die Werte für die Dispersionen VD1, D1, D2 und D3 sind in Tabelle 1 angegeben.

1. Vergleichsdispersion VD1

In einem Polymerisationsgefäß legte man unter Stickstoffatmossphäre 250 ml entionisiertes Wasser und 1,26 g einer 1,4 gew.-%igen wässrigen Lösung des Fe-EDTA-Komplexes (als Natriumsalz) vor und erwärmte auf 70 °C. Dann gab man unter Beibehaltung der Temperatur in einer Portion 2 % der Monomeremulsion und je 20 % von Initiatorlösung I und Initiatorlösung II in das Polymerisationsgefäß und behielt die Temperatur 30 min bei. Danach gab man, gleichzeitig beginnend, innerhalb von 3 h die restliche Monomeremulsion und innerhalb 4 h die Restmengen von Initiatorlösung I und II über getrennte Zuläufe in das Polymerisationsgefäß. Nach Beendigung der Initiatorzugabe gab man in einer Portion 1,14 g einer 70 gew.-%igen, wässrigen tert.-Butylhydroperoxid-Lösung und 6,11 g einer 13 gew.-%igen wässrigen Lösung des Acetonbisulfit-Addukts und behielt eine Stunde eine Temperatur von 70°C bei. Anschließend kühlte man auf Raumtemperatur, neutralisierte mit 10 gew.-%iger wässriger Natronlauge auf pH 7,8 und filtrierte. Die erhaltene Dispersion hatte einen Feststoffgehalt von 57,6 Gew.-%. Der gewichtsmittlere Polymerteilchendurchmesser lag bei 310 nm, die MFT lag unterhalb 0°C. Die mittels DSC bestimmte Glasübergangstemperatur des Polymers lag bei 5,2°C.

Monomeremulsion:

| | |
|---|---|
| 138,5 g | Wasser |
| 14,2 g | Dowfax® 2A1 (45 Gew.-%ige Lösung in Wasser) |
| 40,0 g | eines ethoxylierten $C_{16}$-$C_{18}$-Fettalkohols mit einem mittleren Ethoxylierungsgrad von 18 (20 Gew.-%ige Lösung in Wasser) |
| 480,0 g | n-Butylacrylat |
| 320,0 g | Methylmethacrylat |
| 16,0 g | 50 gew.-%ige wässrige Acrylamid-Lösung, |

Initiatorlösung I:

| | |
|---|---|
| 3,43 g | 70 gew.-%ige, wässrige tert.-Butylhydroperoxid-Lösung |
| 70,0 g | entionisiertes Wasser |

Initiatorlösung II:

| | |
|---|---|
| 18,3 g | 13 gew.-%ige, wässrige Lösung des Aceton-Bisulfit-Addukts |
| 70,0 g | entionisiertes Wasser |

2. Dispersion D1 (erfindungsgemäß)

In einem Polymerisationsgefäß legte man unter Stickstoffatmossphäre 250 ml entionisiertes Wasser und 1,26 g einer 1,4 gew.-%igen wässrigen Lösung des Fe-EDTA-Komplexes (als Natriumsalz) vor und erwärmte auf 70 °C. Dann gab man unter Beibehaltung der Temperatur in einer Portion 2 % der Monomeremulsion und je 20 % von Initiatorlösung I und Initiatorlösung II in das Polymerisationsgefäß und behielt die Temperatur 30 min. bei. Danach gab man, gleichzeitig beginnend, innerhalb von 3 h die restliche Monomeremulsion und innerhalb 4 h die Restmengen von Initiatorlösung I und II über getrennte Zuläufe in das Polymerisationsgefäß. Nach Beendigung der Initiatorzugabe kühlte man auf 40 °C und gab dann in einer Portion 16 g tert.-Butylmethacrylat in das Polymerisationsgefäß. Nach weiteren 10 min bei 40 °C gab man in einer Portion 2,3 g einer 70 gew.-%igen, wässrigen tert.-Butylhydroperoxid-Lösung und 12,2 g einer 13 gew.-%igen wässrigen Lösung des Acetonbisulfit-Addukts zu, erwärmte dann auf 60 °C und behielt die 60 °C eine Stunde bei. Anschließend kühlte man auf Raumtemperatur, neutralisierte mit 10 gew.-%iger wässriger Natronlauge auf pH 8,0 und filtrierte. Die erhaltene Dispersion hatte einen Feststoffgehalt von 57,9 Gew.-%. Der gewichtsmittlere Polymerteilchendurchmesser lag bei 195 nm, die MFT lag unterhalb 0 °C. Die Glasübergangstemperatur des Polymers lag bei 5,1 °C.

Monomeremulsion:

| | |
|---|---|
| 134,0 g | Wasser |
| 14,2 g | Dowfax® 2A1 (45 Gew.-%ige Lösung in Wasser) |
| 40,0 g | eines ethoxylierten $C_{16}$-$C_{18}$-Fettalkohols mit einem mittleren Ethoxylierungsgrad von 18 (20 Gew.-%ige Lösung in Wasser) |

Tabelle fortgesetzt

| | |
|---|---|
| 470,4 g | n-Butylacrylat |
| 313,6 g | Methylmethacrylat |
| 16,0 g | 50 gew.-%ige wässrige Acrylamid-Lösung, |

Initiatorlösung I:

| | |
|---|---|
| 3,43 g | 70 gew.-%ige, wässrige tert.-Butylhydroperoxid-Lösung |
| 70,0 g | entionisiertes Wasser |

Initiatorlösung II:

| | |
|---|---|
| 18,3 g | 13 gew.-%ige, wässrige Lösung des Aceton-Bisulfit-Addukts |
| 70,0 g | entionisiertes Wasser |

3. Dispersion D2 (erfindungsgemäß)

Nach der für Dispersion D1 angegebenen Vorschrift wurde eine Dispersion D2 hergestellt. Die Monomeremulsion wies die unten angegebene Zusammensetzung auf. Es wurden 48 g tert.-Butylmethacrylat eingesetzt. Die Dispersion wurde nach dem Abkühlen auf pH 7,5 neutralisiert und anschließend filtriert. Die erhaltene Dispersion hatte einen Feststoffgehalt von 56,2 Gew.-%. Der gewichtsmittlere Polymerteilchendurchmesser lag bei 300 nm, die MFT lag unterhalb 0 °C. Die Glasübergangstemperatur des Polymers lag bei 5,1 °C.

Monomeremulsion:

| | |
|---|---|
| 134,0 g | Wasser |
| 14,2 g | Dowfax® 2A1 (45 Gew.-%ige Lösung in Wasser) |
| 40,0 g | eines ethoxylierten $C_{16}$-$C_{18}$-Fettalkohols mit einem mittleren Ethoxylierungsgrad von 18 (20 Gew.-%ige Lösung in Wasser) |
| 451,2 g | n-Butylacrylat |
| 300,8 g | Methylmethacrylat |
| 16,0 g | 50 gew.-%ige wässrige Acrylamid-Lösung. |

4. Dispersion D3 (erfindungsgemäß)

Nach der für Dispersion D1 angegebenen Vorschrift wurde eine Dispersion D3 hergestellt. Die Monomeremulsion wies die unten angegebene Zusammensetzung auf. Es wurden 80 g tert.-Butylmethacrylat eingesetzt. Die Dispersion wurde nach dem Abkühlen auf pH 7,5 neutralisiert und anschließend filtriert. Die erhaltene Dispersion hatte einen Feststoffgehalt von 54,9 Gew.-%. Der gewichtsmittlere Polymerteilchendurchmesser lag bei 300 nm, die MFT lag unterhalb 0 °C. Die Glasübergangstemperatur des Polymers lag bei 8,0 °C.

Monomeremulsion:

| | |
|---|---|
| 134,0 g | Wasser |
| 14,2 g | Dowfax® 2A1 (45 Gew.-%ige Lösung in Wasser) |
| 40,0 g | eines ethoxylierten $C_{16}$-$C_{18}$-Fettalkohols mit einem mittleren Ethoxylierungsgrad von 18 (20 Gew.-%ige Lösung in Wasser) |
| 432,0 g | n-Butylacrylat |
| 288,0 g | Methylmethacrylat |
| 16,0 g | 50 gew.-%ige wässrige Acrylamid-Lösung. |

5. Dispersion D4 (erfindungsgemäß)

Nach der für Dispersion D1 angegebenen Vorschrift wurde eine Dispersion D4 hergestellt. Die Monomeremulsion wies die unten angegebene Zusammensetzung auf. Es wurden 40 g tert.-Butylmethacrylat eingesetzt. Die Dispersion

wurde nach dem Abkühlen auf pH 7,5 neutralisiert und anschließend filtriert. Die MFT lag unterhalb 2 °c.

Monomeremulsion:

| | |
|---|---|
| 134,0 g | Wasser |
| 14,2 g | Dowfax® 2A1 (45 Gew.-%ige Lösung in Wasser) |
| 40,0 g | eines ethoxylierten $C_{16}$-$C_{18}$-Fettalkohols mit einem mittleren Ethoxylierungsgrad von 18 (20 Gew.-%ige Lösung in Wasser) |
| 456,0 g | n-Butylacrylat |
| 304,0 g | Methylmethacrylat |
| 16,0 g | 50 gew.-%ige wässrige Acrylamid-Lösung. |

6. Dispersion D5 (erfindungsgemäß)

Nach der für Dispersion D4 angegebenen Vorschrift wurde eine Dispersion D5 hergestellt. Es wurden 40 g Methylmethacrylat anstelle von tert.-Butylmethacrylat eingesetzt. Die Dispersion wurde nach dem Abkühlen auf pH 7,5 neutralisiert und anschließend filtriert. Die MFT lag unterhalb 2 °C.

Tabelle 1

| Dispersion | t-sMFr [Gew.-%]1) | RF2) [MPa] | RD3) [%] |
|---|---|---|---|
| VD1 | 0 | 3,2 | 625 |
| D1 | 2 | 3,9 | 590 |
| D2 | 6 | 6,3 | 510 |
| D3 | 10 | 9,2 | 430 |

1) Gew.-% tert.-Butylmethacrylat bezogen auf Gesamtmonomermenge
2) Reißfestigkeit
3) Reißdehnung

II. Herstellung der erfindungsgemäßen Zubereitungen

Die Herstellung der pigmenthaltigen Zubereitungen erfolgte durch Abmischen der angegebenen Komponenten mit den auf einen Polymergehalt von 50 Gew.-% verdünnten Dispersionen VD1, D1 bis D5.

In einem Hochgeschwindigkeitsmischer wurden die im Folgenden angegebenen Komponenten in der angegebenen Reihenfolge gemischt:

| | |
|---|---|
| Wasser | 100,0 Teile |
| Dispergiermittel1 | 2,0 Teile |
| Natriumpolyphosphatlösung2) (in Wasser) | 4,0 Teile |
| handelsübliches Biozid 3) | 3,0 Teile |
| Entschäumer 4) | 2,0 Teile |
| Verdicker A 5) | 50,0 Teile |
| Natronlauge (20 gew.-%ig) | 2,0 Teile |
| Titanpigment | 155,0 Teile |
| Calciumcarbonat | 175,0 Teile |
| Talk | 55,0 Teile |

Anschließend gab man hierzu unter Rühren:

| | |
|---|---|
| Entschäumer 4) | 1,0 Teile |
| Dispersion (50 gew.-%ig) | 370,0 Teile |
| Verdicker B9) | 50,0 Teile |

Tabelle fortgesetzt

| | |
|---|---|
| Wasser | 1,5 Teile. |

1 30 Gew.-%ige wäßrige Ammoniumpolyacrylat-Lösung der BASF AG

2 Calgon®, BK-Ladenburg GmbH, Deutschland

3 1,2-Benzoisothiazolin-3-on

4 Agitan® A280 der Münzing-Chemie GmbH, Heilbronn

5 Natrosol® 250 HR, 2 gew.-%ige wässrige Lösung einer Hydroxy-ethylcellulose; Hercules GmbH, Düsseldorf

6 Titandioxid: Kronos® 2043 der Kronos Titan GmbH, Leverkusen

7 Omyacarb 5GU, mittler Teilchengröße 5 µm; Omya GmbH, Köln

8 Talk AT1; Norwegische Talk Deutschland GmbH, 63628 Bad Soden-Salmünster

9 Polyurethanverdicker Rheolat® 208, 5 gew.-%ige wässrige Lösung; RHEOX GmbH, Leverkusen.

Bestimmung der Pendelhärte:

Die Bestimmung der Pendelhärte erfolgte gemäß DIN 53157. Hierzu wurde eine Probe hergestellt, indem man eine Glasplatte jeweils mit einer der erfindungsgemäßen Zubereitungen mit einer Beschictungsstärke von wenigstens 30 µm beschichtet wurde. Vor dem Test ließ man den Anstrich 5 Wochen trocknen. Die Pendelhärte wurde mittels einer Apparatur nach König gemäß DIN 53 157 bestimmt. Angegeben ist die Zeit in Sekunden innerhalb der die Amplitude des Pendels von 6° auf eine Amplitude von 3° abgefallen ist. Eine Zunahme des Wertes entspricht einer zunehmenden Oberflächenhärte der Beschichtung. Die Ergebnisse sind in Tabelle 2 zusammengefaßt.

Bestimmung der Naßabriebfestigkeit:

Die erfindungsgemäßen Zubereitungen wurden in Anlehnung an DIN 53778 Blatt 2 auf ihre Abriebfestigkeit geprüft: Mit Hilfe eines 60 mm breiten Rakels wurde auf eine Leneta-Folie von ca. 430 x 80 mm ein Anstrichfilm aufgetragen. Die Spalthöhe wurde so gewählt, dass eine Trockenschichtdicke von 100 µm resultierte. Der Film wurde 28 Tage unter Normklimabedingungen getrocknet. Dann wurde in einem Scheuergerät unter ständigem Zutropfen einer 0,25%igen wässrigen Lösung von n-Dodecylbenzolsulfonat-Natriumsalz eine Scheuerbürste über den Anstrich geführt. Die Anzahl der Doppelhübe bis zum Durchscheuern des Anstrichs diente als Maß für die Scheuerfestigkeit bzw. Naßabriebfestigkeit. Die Ergebnisse sind in Tabelle 2 zusammengefaßt.

Tabelle 2:

| Beispiel | Dispersion | Pendelhärte [sec] | Naßabriebfestigkeit |
|---|---|---|---|
| V1 | VD1 | 16,8 | 1350 |
| 1 | D1 | 18,3 | 1750 |
| 2 | D2 | 23,8 | 2200 |
| 3 | D3 | 30,8 | 1950 |

Bestimmung der Anschmutzneigung:

zur Bestimmung der Anschmutzneigung wurden Anstrichproben in einem Freibewitterungsstand bei Ludwigshafen a. Rh, Rheinland-Pfalz mit einer Neigung von 45° aufgestellt, und ein Jahr bewittert. Die Schmutzaufnahme wurde visuell unter Zugrundelegung einer Notenskala von 0 bis 5 bestimmt wobei ein wert von 0 einem nicht zu beobachtenden Anschmutzen und ein wert von 5 einem deutlichen Anschmutzen entspricht. Die Werte sind für die Zubereitungen der Dispersionen VD1, D4 und D5 in Tabelle 3 angegeben.

Tabelle 3:

| Beispiel | Dispersion | Anschmutzneigung |
|---|---|---|
| V1 | VD1 | 3 |
| 4 | D4 | 2 |
| 5 | D5 | 2 |

## Patentansprüche

**1.** Pigmenthaltige, wässrige Zubereitung, die im wesentlichen frei ist von organischen Lösungsmitteln, enthaltend:

i) wenigstens ein Polymer A in Form dispers verteilter Polymerteilchen, worin die Polymerteilchen

- 80 Gew.-% bis 99,9 Gew.-%, bezogen auf das Gesamtgewicht des Polymers A, eines in Wasser nicht löslichen Polymers 1 mit einer Glasübergangstemperaturn $T_G1$ im Bereich von -50 bis +40 °C, aufgebaut aus ethylenisch ungesättigten Monomeren M1 und.
- 0,1 bis 20 Gew.-%, bezogen auf das Gesamtgewicht des Polymers A, eines oder mehrerer, in Wasser nicht löslicher Polymere i mit einer Glasübergangstemperatur $T_Gi$ oberhalb 70 °C, aufgebaut aus ethylenisch ungesättigten Monomeren Mi, umfassen,

wobei für alle Polymere i gilt, daß die Differenz $T_Gi - T_G1 > 30$ K ist.
ii) wenigstens ein Pigment und gegebenenfalls einen odere mehrere Füllstoffe.

wobei das Polymer A erhältlich ist durch ein mehrstufiges radikalisches Emulsionspolymerisationsverfahren in einem wässrigen Polymerisationsmedium, umfassend die aufeinanderfolgenden Stufen:

a) Herstellung eines Polymers 1 durch Polymerisation der Monomere 1 in einer ersten Polymerisationsstufe,
b) Herstellung eines ersten Polymers i durch Polymerisation einer ersten Charge der Monomere Mi in Gegenwart des Polymers 1 in einer zweiten Polymerisationsstufe,
c) gegebenenfalls Herstellung weiterer Polymere i durch Polymerisation weiterer Monomere Mi in jeweils aufeinanderfolgenden Polymerisationsstufen i in Gegenwart des Polymerisats der jeweils vorangegangenen Polymerisationsstufe,

wobei die Polymerisation der Monomere M1 vor Beginn der Zugabe der Monomere i in der zweiten Polymerisationsstufe im wesentlichen abgeschlossen ist und die Zugabe der Monomere Mi in der zweiten und gegebenenfalls in den weiteren Polymerisationsstufen so erfolgt, daß während der Zugabe der Monomere Mi der Polymerisationsumsatz $U^i$ der in der jeweiligen Polymerisationsstufe zu polymerisierenden Monomere Mi zu keinem. Zeitpunkt 50 mol-% überschreitet.

**2.** Zubereitung nach Anspruch 1, wobei die Monomere M1 und die Monomere Mi jeweils wenigstens 80 Gew.-% monoethylenisch ungesättigte, hydrophobe Monomere MH umfassen.

**3.** Zubereitung nach Anspruch 2, wobei die Monomere MH ausgewählt sind unter vinylaromatischen Monomeren, den Estern der Acrylsäure mit $C_1$-$C_{12}$-Alkanolen oder $C_5$-$C_{10}$-Cycloalkanolen und den Estern der Methacrylsäure mit $C_1$-$C_{12}$-Alkanolen oder $C_5$-$C_{10}$-cycloalkanolen.

**4.** Zubereitung nach Anspruch 2-oder 3, wobei die Monomere M1 als Monomere MH,

- 20 bis 80 Gew.-%, bezogen auf die Monomere MH, wenigstens eines Monomers MHa, dessen Homopolymerisat eine Glasübergangstemperatur unterhalb 10 °C aufweist, und
- 20 bis 80 Gew.-%, bezogen auf die Monomere MH, wenigstens eines Monomers MHb, dessen Homopolymerisat eine Glasübergangstemtperatur oberhalb 30 °C aufweist,

umfassen.

5. Zubereitung nach einem der Ansprüche 2 bis 4, wobei die Monomere M1 zusätzlich wenigstens ein mit den Monomeren MH copolymerisierbares, monoethylenisch ungesättigtes Monomer MW umfasen, das eine Wasserlöslichkeit ≥ 100 g/l. (bei 25 °C) aufweist.

6. Zubereitung nach einem der Ansprüche 2 bis 5, wobei die Monomere i ausschließlich hydrophobe Monomeren MH umfassen.

7. Zubereitung nach Anspruch 6, wobei die Monomere MH ausgewählt sind unter Methylmethacrylat, tert.-Butylacrylat, n-Butylmethacrylat, Isobutylmethacrylat, tert.-Butylmethacrylat, iso-Bornylacrylat, iso-Bornylmethacrylat, 4-tert.-Butylcyclohexylacrylat, 4-tert.-Butylcyclohexylmethacrylat, 3,3,5-Trimethylcyclohexylacrylat, 3,3,5-Trimethylcyclohexylmethacrylat, Styrol, α-Phenylstyrol, α-Methylstyrol und Acrylnitril.

8. Zubereitung nach Anspruch 1, wobei die Polymerisationsreaktion nach Beendigung der Zugabe der Monomere M1 im wesentlichen unterbrochen wird, die Monomeren Mi der zweiten Polymerisationsstufe in einer Portion zugegeben werden, das resultierende Gemisch gegebenenfalls eine Zeit gerührt wird, die Polymerisation fortgesetzt wird, und diese Vorgehensweise für die gegebenenfalls erforderlichen, weiteren Polymerisationsstufen, nach Beendigung der jeweils vorangegangenen Polymerisationsstufe wiederholt wird.

9. Zubereitung gemäß einem der vorhergehenden Ansprüche in Form einer Dispersionsfarbe.

10. zubereitung nach einem der vorhergehenden Ansprüche, wobei das Gewichtsverhältnis von Polymer A zur Gesamtmasse aus Pigment und Füllstoff in der Zubereitung im Bereich von 3:1 bis 1:15 liegt.

## Claims

1. A pigmented aqueous formulation which is essentially free from organic solvents, comprising:

i) at least one polymer A in the form of polymer particles in disperse distribution, said particles comprising

- from 80 to 99.9% by weight, based on the overall weight of the polymer A, of a water-insoluble polymer 1 having a glass transition temperature $T_G1$ in the range from -50 to +40°C, built up from ethylenically unsaturated monomers M1, and
- from 0.1 to 20% by weight, based on the overall weight of the polymer A, of one or more water-insoluble polymers i having a glass transition temperature $T_Gi$ of more than 70°C, built up from ethylenically unsaturated monomers Mi,

it being true for all polymers i that the difference $T_gi - T_g1$ is > 30 K,
ii) at least one pigment and, if desired, one or more extenders,

wherein the polymer A is obtainable by a multistage free-radical emulsion polymerization process in an aqueous polymerization medium, comprising the successive stages of:

a) preparing a polymer 1 by polymerizing the monomers 1 in a first polymerization stage,
b) preparing a first polymer i by polymerizing a first batch of the monomers Mi in the presence of the polymer 1 in a second polymerization stage,
c) if desired, preparing further polymers i by polymerizing further monomers Mi in successive polymerization stages i in the presence of the polymer of the respective preceding polymerization stage,

the polymerization of the monomers M1 being essentially at an end before the addition of the monomers i is begun in the second polymerization stage, and the addition of the monomers Mi in the second and any subsequent polymerization stages taking place such that, during the addition of the monomers Mi, the polymerization conversion $U^i$ of the monomers Mi to be polymerized in the respective polymerization stage at no point exceeds 50 mol%.

**2.** A formulation as claimed in claim 1, wherein the monomers M1 and the monomers Mi each comprise at least 80% by weight of monoethylenically unsaturated, hydrophobic monomers MH.

**3.** A formulation as claimed in claim 2, wherein the monomers MH are selected from vinylaromatic monomers, the esters of acrylic acid with $C_1$-$C_{12}$-alkanols or $C_3$-$C_{10}$-cycloalkanols, and the esters of methacrylic acid with $C_1$-$C_{12}$-alkanols or $C_5$-$C_{10}$-cycloalkanols.

**4.** A formulation as claimed in claim 2 or 3, wherein the monomers M1 comprise as monomers MH,

- from 20 to 80% by weight, based on the monomers MH, of at least one monomer MHa whose homopolymer has a glass transition temperature of less than 10°C and
- from 20 to 80% by weight, based on the monomers MH, of at least one monomer MHb whose homopolymer has a glass transition temperature of more than 30°C.

**5.** A formulation as claimed in any of claims 2 to 4, wherein the monomers M1 additionally comprise at least one monoethylenically unsaturated monomer MW which is copolymerizable with the monomers MH and has a water solubility of ≥ 100 g/l (at 25°C).

**6.** A formulation as claimed in any of claims 2 to 5, wherein the monomers i comprise exclusively hydrophobic monomers MH.

**7.** A formulation as claimed in claim 6, wherein the monomers MH are selected from methyl methacrylate, tert-butyl acrylate, n-butyl methacrylate, isobutyl methacrylate, tert-butyl methacrylate, isobornyl acrylate, isobornyl methacrylate, 4-tert-butylcyclohexyl acrylate, 4-tert-butylcyclohexyl methacrylate, 3,3,5-trimethylcyclohexyl acrylate, 3,3,5-trimethylcyclohexyl methacrylate, styrene, $\alpha$-phenylstyrene, $\alpha$-methylstyrene and acrylonitrile.

**8.** A formulation as claimed in claim 1, wherein the polymerization reaction is essentially interrupted after the end of the addition of the monomers M1, the monomers Mi of the second polymerization stage are added in one portion, the resultant mixture is stirred for a while if desired, the polymerization is continued, and this procedure is repeated for any required further polymerization stages after the end of the respective preceding polymerization stage.

**9.** A formulation as claimed in any of the preceding claims which is in the form of an emulsion paint.

**10.** A formulation as claimed in any of the preceding claims, wherein the weight ratio of polymer A to the total mass of pigment and extender in the formulation is in the range from 3:1 to 1:15.

**Revendications**

**1.** Préparation aqueuse contenant des pigments, qui est essentiellement exempte de solvants organiques, contenant :

i) au moins un polymère A sous la forme de particules de polymère réparties de manière dispersée, les particules de polymère comportant

- 80 % en poids à 99,9 % en poids, par rapport au poids total du polymère A, d'un polymère 1 non soluble dans l'eau, présentant une température de transition vitreuse $T_G1$ de l'ordre de -50 à +40°C, constitué de monomères éthyléniquement insaturés M1, et
- 0,1 à 20 % en poids, par rapport au poids total du polymère A, d'un ou plusieurs polymères i non solubles dans l'eau, présentant une température de transition vitreuse $T_Gi$ supérieure à 70°C, constitués de monomères éthyléniquement insaturés Mi, la différence $T_Gi - T_G1 > 30$ K valant pour tous les polymères i,

ii)au moins un pigment et éventuellement une ou plusieurs matières de remplissage,

le polymère A pouvant être obtenu par un procédé de polymérisation en émulsion radicalaire à plusieurs étapes dans un milieu de polymérisation aqueux, comprenant les étapes successives :

a) une préparation d'un polymère 1 par polymérisation des monomères 1 dans une première étape de polymérisation,

b) une préparation d'un premier polymère i par polymérisation d'une première charge des monomères Mi en présence du polymère 1 dans une deuxième étape de polymérisation,

c) éventuellement une préparation de polymères i supplémentaires par polymérisation de monomères Mi supplémentaires dans des étapes de polymérisation i respectivement successives en présence du polymère de l'étape de polymérisation respectivement précédente,

la polymérisation des monomères M1 étant sensiblement achevée avant le commencement de l'addition des monomères i dans la deuxième étape de polymérisation et l'addition des monomères Mi dans la deuxième étape de polymérisation et éventuellement dans les étapes supplémentaires ayant lieu de façon que, pendant l'addition des monomères Mi, le degré de polymérisation $U^i$ des monomères Mi à polymériser dans l'étape de polymérisation respective ne dépasse à aucun moment 50 % molaires.

**2.** Préparation suivant la revendication 1, dans laquelle les monomères M1 et les monomères Mi comportent chacun au moins 80 % en poids de monomères hydrophobes MH monoéthyléniquement insaturés.

**3.** Préparation suivant la revendication 2, dans laquelle les monomères MH sont choisis parmi des monomères vinyl-aromatiques, les esters de l'acide acrylique avec des alcanols en $C_1$-$C_{12}$ ou des cycloalcanols en $C_5$-$C_{10}$ et les esters de l'acide méthacrylique avec des alcanols en $C_1$-$C_{12}$ ou des cycloalcanols en $C_5$-$C_{10}$.

**4.** Préparation suivant la revendication 2 ou 3, dans laquelle les monomères M1 comportent, comme monomères MH,

- 20 à 80 % en poids, par rapport aux monomères MH, d'au moins un monomère MHa, dont l'homopolymère présente une température de transition vitreuse inférieure à 10°C, et
- 20 à 80 % en poids, par rapport aux monomères MH, d'au moins un monomère MHb, dont l'homopolymère présente une température de transition vitreuse supérieure à 30°C.

**5.** Préparation suivant l'une des revendications 2 à 4, dans laquelle les monomères M1 comportent en supplément au moins un monomère MW monoéthyléniquement insaturé, copolymérisable avec les monomères MH, qui présente une solubilité dans l'eau ≥ 100 g/l (à 25°C).

**6.** Préparation suivant l'une des revendications 2 à 5, dans laquelle les monomères i comportent exclusivement des monomères hydrophobes MH.

**7.** Préparation suivant la revendication 6, dans laquelle les monomères MH sont choisis parmi du méthacrylate de méthyle, de l'acrylate de tert-butyle, du méthacrylate de n-butyle, du méthacrylate d'isobutyle, du méthacrylate de tert-butyle, de l'acrylate d'iso-bornyle, du méthacrylate d'iso-bornyle, de l'acrylate de 4-tert-butylcyclohexyle, du méthacrylate de 4-tert-butylcyclohexyle, de l'acrylate de 3,3,5-triméthylcyclohexyle, du méthacrylate de 3,3,5-triméthylcyclohexyle, du styrène, de l'α-phénylstyrène, de l'α-méthylstyrène et de l'acrylonitrile.

**8.** Préparation suivant la revendication 1, dans laquelle la réaction de polymérisation est sensiblement interrompue après achèvement de l'addition des monomères M1, les monomères Mi de la deuxième étape de polymérisation sont ajoutés en une portion, le mélange résultant est éventuellement agité pendant un temps, la polymérisation est poursuivie et ce mode opératoire est répété pour les étapes de polymérisation supplémentaires, éventuellement requises, après achèvement de l'étape de polymérisation respectivement précédente.

**9.** Préparation suivant l'une des revendications précédentes, sous la forme d'une couleur de dispersion.

**10.** Préparation suivant l'une des revendications précédentes, dans laquelle le rapport pondéral entre le polymère A et la masse totale de pigment et de matière de remplissage dans la préparation est de l'ordre de 3/1 à 1/15.